Europäisches Patentamt

European Patent Office

Office européen des brevets

(19)

(11) Veröffentlichungsnummer: **0 157 292 B1**

# EUROPÄISCHE PATENTSCHRIFT

(45) Veröffentlichungstag der Patentschrift: **10.07.91**

(21) Anmeldenummer: **85103222.7**

(22) Anmeldetag: **20.03.85**

(51) Int. Cl.5: **E04D 15/02**, E04G 23/08,
E04G 21/04, E04D 15/00

(54) **Vorrichtung zum Fördern von Material auf Dächern mit geneigt verlaufender Dachhaut.**

(30) Priorität: **03.04.84 DE 8410213 U**

(43) Veröffentlichungstag der Anmeldung:
**09.10.85 Patentblatt 85/41**

(45) Bekanntmachung des Hinweises auf die
Patenterteilung:
**10.07.91 Patentblatt 91/28**

(84) Benannte Vertragsstaaten:
**AT BE CH FR GB LI**

(56) Entgegenhaltungen:
**AT-B- 255 741        DE-A- 2 338 690
DE-A- 2 919 781      DE-U- 7 538 594
DE-U- 8 410 213      FR-A- 923 891
US-A- 1 510 288**

**Zeitschrift "Deutsches Dachdecker Handwerk", Juli 1962, Seite 648**

(73) Patentinhaber: **Lobmeier, Albert
Froschloch 8
W-4600 Dortmund - 50 (Hombruch)(DE)**

(72) Erfinder: **Lobmeier, Albert
Froschloch 8
W-4600 Dortmund - 50 (Hombruch)(DE)**

## Beschreibung

Die Erfindung betrifft eine Vorrichtung zum Fördern einer abzuräumenden Dacheindeckung od. dgl. von der geneigt verlaufenden Dachhaut bis zum Flur, wobei die Förderung im Dachbereich im wesentlichen in der Fallinie des Daches erfolgt.

Insbesondere beim Neueindecken von Pfannen- bzw. Ziegeldächern stellt sich das Problem des Abräumens der alten Dacheindeckung für die Überführung der abgeräumten Ziegel bzw. Pfannen vom Dach etwa in einen ebenerdig aufgestellten Transportbehälter.

Bei einer Vorrichtung der eingangs beschriebenen Art (vgl. die in der Zeitschrift "Deutsches Dachdecker-Handwerk" vom Juli 1962 auf Seite 648 dargestellte Schüttrutsche) ist auf der gesamten Länge ein oben offener Trog vorgesehen. Eine solche Ausbildung erleichtert zwar im Dachbereich das Einfüllen der abgeräumten Dacheindeckung, im Bereich zwischen der Traufe und dem Flur widerspricht eine solche Anordnung jedoch den Sicherheitsanforderungen, insbesondere bei Dacharbeiten in belebten Straßen. Außerdem kann sich eine erhebliche Staubbelästigung ergeben.

Ausgehend von diesem Stand der Technik liegt der Erfindung die Aufgabe zugrunde, eine gattungsgemäße Vorrichtung so auszubilden, daß einerseits eine Gefährdung von Personen durch herabfallende Teile der Dacheindeckung während der Abwärtsförderung weitgehend ausgeschlossen ist und andererseits die einzelnen Elemente der Vorrichtung einfach herstellbar sowie mit geringem Aufwand lagerbar und transportierbar sind.

Diese Aufgabe wird erfindungsgemäß dadurch gelöst, daß die Vorrichtung aus trogförmigen, gleichartigen Grundelementen zusammengesetzt ist, die sich jeweils zum fallseitigen Ende hin geringfügig verjüngen und an ihren beiden langsrändern Anschlußteile für Verbindungsmittel aufweisen, daß die Grundelemente auf dem Dach in den Endbereichen mit Überdeckung ineinandergehängt verlegt eine nach oben offene Rutsche bilden und daß von der TRaufe bis zum Flur ein Fallschacht vorgesehen ist, dessen in den Endbereichen ineinandergesteckte Schachtschüsse aus jeweils zwei Grundelementen bestehen, wobei die über die Anschlußteile und die VErbindungsmittel verbundenen Grundelemente so zueinander angeordnet sind, daß die Entfernung zwischen den Böden der Schachtschüsse senkrecht zur Verbindungsebene der beiden Grundelemente der doppelten Höhe eines Rutschenschusses entsprechen.

Nach einer bevorzugten Ausführungsform sind die Anschlußteile als Randhülsen und die Verbindungsmittel als in die Randhülsen einschiebbare Verbindungsstäbe ausgebildet, wobei die Randhülsen an den beiden Längsrändern gegeneinander auf Lücke versetzt angeordnet sind und im Abstand vom sich verjüngenden Ende des Grundelementes enden.

Die Rutsche wird so auf dem Dach abgelegt, daß der Endschuß in den Fallschacht mündet. Danach bedarf es nur mehr einer einzigen Person, die die abzuräumenden Pfannen aufnimmt und in die Rutsche überführt. Ist der Bereich des Daches im Einzugsgebiet der Rutsche abgeräumt, wird die Rutsche umgelegt.

Weitere vorteilhafte Ausgestaltungen der Erfindung sind Gegenstand der Ansprüche 3 bis 13.

Mit einer Auslaufbremse gemäß den Ansprüchen 11-13 wird beim Abräumen einer alten Dacheindeckung sichergestellt, daß das abgeräumte Material einwandfrei aus der Rutsche in den nachgeordneten Fallschacht, ggf. dann auch in eine nachgeordnete, sich zwischen Traufe und Flur erstreckende Rutsche gelangt.

Abgesehen von der herkömmlichen Fertigung der Rutschenschüsse aus Blech lassen sich die Schüsse natürlich auch gewichtssparend aus einem schlagfesten Kunststoff herstellen. Die benötigten Verbindungselemente werden dabei vorzugsweise in das den Rutschenschuß bildende Formteil eingeformt bzw. an das Formteil angeformt.

In der Zeichnung ist die Erfindung anhand von in ganz schematischer Weise dargestellten Ausführungsbeispielen weitergehend erläutert. Es zeigt

**Fig.** 1 die an einem Haus mit Satteldach angebrachte Vorrichtung zum Wegfördern der abzuräumenden Dacheindeckung,

**Fig.** 2 ein Grundelement in schaubildlicher Darstellung,

**Fig** 3 einen aus solchen Grundelementen gebildeten Schachtschuß in schaubildlicher Darstellung,

**Fig.** 4 zwei aufeinanderfolgende Rutschenschüsse in schaubildlicher Darstellung, abgebrochen,

**Fig.** 5 zwei aufeinanderfolgende Schachtschüsse in einer Ansicht, abgebrochen,

**Fig.** 6 einen Schnitt nach Linie **VI -VI** in **Fig.** 5,

**Fig.** 7 die Sprengdarstellung einer zwei Schachtschüsse verbindenden Kupplung,

**Fig.** 8 die Kupplung nach **Fig.** 7 in zusammengefügtem Zustand.

**Fig.** 9 einen als Auslaufbremse ausgebildeten Endschuß der auf dem Dach angeordneten Rutsche.

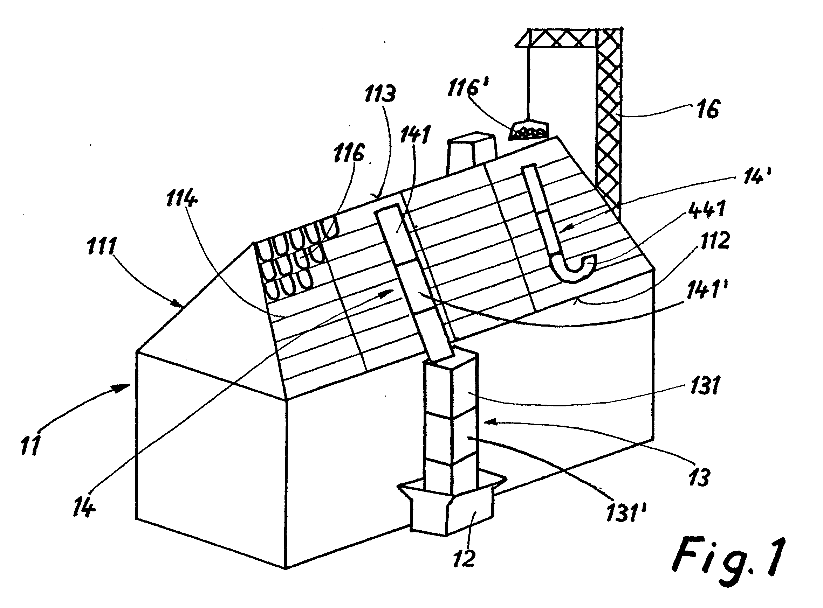

In **Fig.** 1 ist ein Haus **11** dargestellt, dessen Dach **111** neu eingedeckt werden soll. Für die Aufnahme der abzuräumenden alten Dacheindeckung **116** ist vor dem Haus **11** auf dem Flur ein TRansportbehälter **12** aufgestellt, der von einem sich von der Traufe **112** des Hauses **11** zum Transportbehälter **12** erstreckenden, aus Schachtschüssen **131, 131'**... gebildeten Fallschacht **13** beaufschlagt ist. Der Fallschacht **13** seinerseits wird von einer aus Schüssen **141, 141'**... gebildeten, sich von dem Dachfirst **113** zur Traufe **112** erstreckenden Rutsche **14** beaufschlagt, über die die abgeräumten Pfannen der Dacheindeckung **116** dem Fallschacht **13** zugeführt werden, durch den sie in den Transportbehälter **12** gelangen.

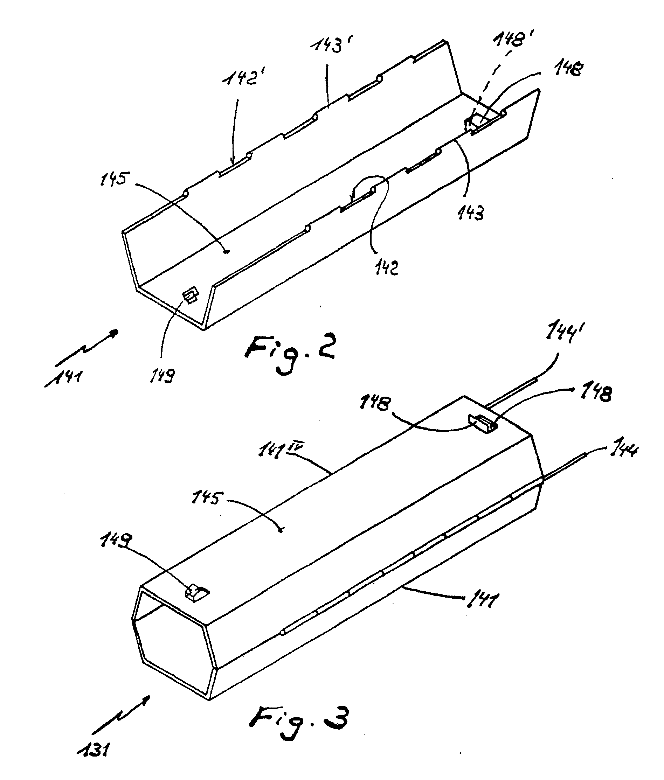

Das Grundelement **140**, das für sich allein den Rutschenschuß **141** bzw. **141'** bildet, ist entsprechend Fig. 2 ausgebildet. Es handelt sich dabei also um einen Trog, der an seinen beiden Längsrändern **142, 142'**in Abständen mit als Hülsen ausgebildeten Anschluteilen **143, 143'** versehen ist. Diese Randhülsen sind an den einander gegenüberliegenden Längsrändern **142, 142'** gegeneinander versetzt auf Lücke so angeordnet, daß sie sich nach dem "Aufstülpen" eines zweiten Grundelementes **140** zusammen mit stabartigen Verbindungsmitteln **144, 144'** zu Scharnieren ergänzen, woraus dann ein Schuß **131** des Fallschachtes **13** resultiert (**Fig. 3**). Zur Fixierung der VErbindungsstäbe **144, 144'** gegenüber dem schachtschuß **131** können auf die im Endbereich mit Gewinde versehenen Verbindungsstäbe aufschraubbare Muttern vorgesehen sein.

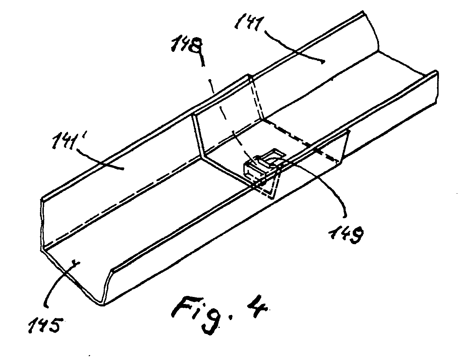

Das Grundelement **140** ist in den Endbereichen mit Verbindungselementen zum Verbinden aufeinanderfolgender Schüsse, z.B. **141, 141'**, versehen. Im dargestellten Fall ist in den Endbereichen des Grundelementes **140** bodenseitig einerseits eine Aussparung **148** und andererseits, das heißt an der gegenüberliegenden Seite, ein aus dem Boden **145** herausgebogenes, einen Haken **149** bildenden Flächenteil angeordnet. In Fallrichtung aufeinander folgende Schüsse, z.B. **141,141'**, werden in der in **Fig. 4** angedeuteten Weise zusammengefügt, das heißt der Schuß **141'** in den Haken **149** des vorausgehenden Schusses **141** eingehängt, wobei der Haken **149** die Ausnehmung **148** im folgenden Schuß **141'** durchgreift.

Die Ausnehmung **148** wird durch Wegbiegen eines Flächenteils **148'** erzeugt, mit dem der Rutschenschuß **141, 141'** an einer Dachlatte angehängt werden kann.

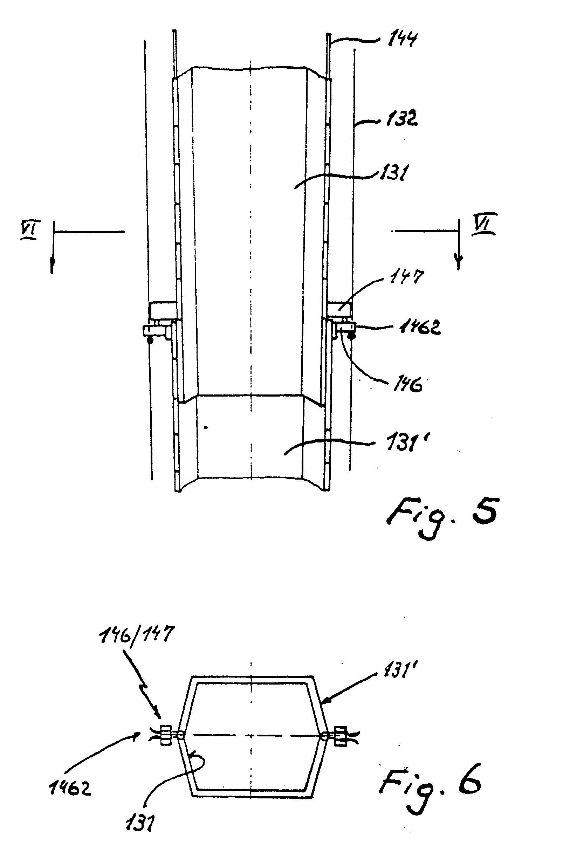

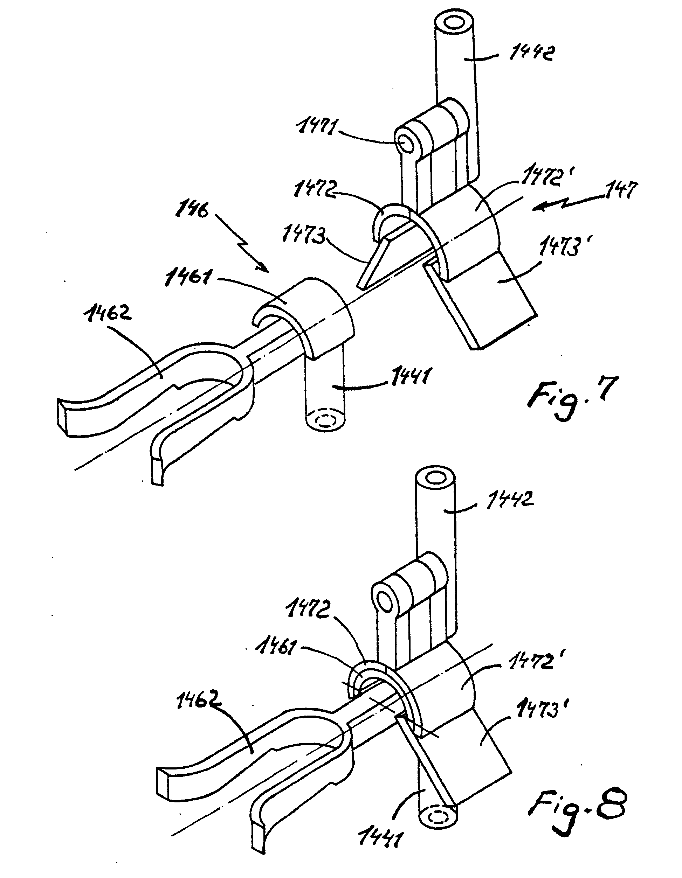

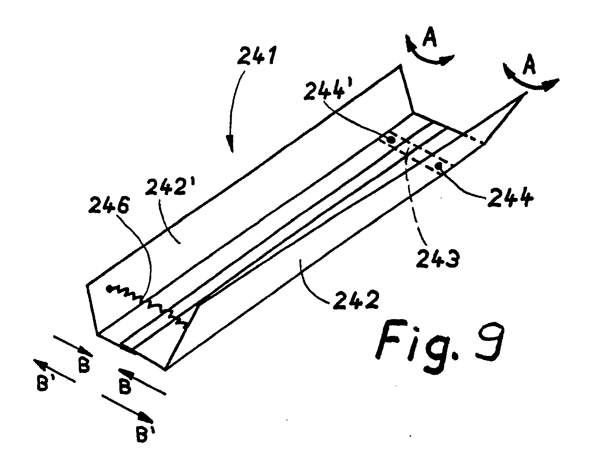

Nach den **Fig. 5** und **6** werden die aufeinanderfolgenden Schachtschüsse **131, 131'**, in ihrer Lage zueinander durch Kupplungen **146/147** fixiert, deren Kupplungsglieder **146** und **147** an den einander gegenüberliegenden Enden **1441** und **1442** der die Grundelemente **140** zum Schachtschuß zusammenfassenden Verbindungsstäbe **144, 144'** angeordnet werden, von denen das dem oberen Ende **1441** der Verbindungsstäbe **144, 144'** zugeordnete Kupplungsglied **146** lösbar in das dem unteren Ende ·**1442** der Verbindungsstäbe**144, 144'** zugeordnete Kupplungsglied **147** einfügbar ist (**Fig. 7** und **8**). Eine am Kupplungsglied **146** vorgesehene, von der Seite her zugängliche Aufnahme **1462**, in die ein Zugglied **132** einfügbar ist, ermöglicht sowohl die Montage als auch die Demontage des Schachtes **13** (**Fig. 1**) vom Dach aus.

Die Kupplung **146/147** ist in den **Fig. 7** und **8** im Detail dargestellt. Danach ist das obere, dem unteren Ende **1442** des Verbindungsstabes **144** zugeordnete Kupplungsglied **147** als von zwei um eine horizontale, vom Verbindungsstab **144** ausgehende Achse **1471** verschwenkbaren Klauen **1472, 1472'** gebildete Falle ausgestaltet, in die sich das als sich in die Falle einfügendes Paßstück **1461** ausgebildete korrespondierende Kupplungsglied **146**am oberen Ende **1441** des Verbindungsstabes **144** lösbar einfügt. Das erforderliche Verschwenken der Klauen **1462, 1462'** wird beim Zusammenfügen von Schachtschüssen durch das Paßstück **1461** selbst bewirkt, das auf an den freien Enden der Klauen **1472, 1472'** vorgesehene Leitbleche **1473, 1473'** auflaufend die Klauen **1472** und **1472'** bis zum Durchtritt des Paßstückes **1461** auseinander drückt, die anschließend das Paßstück **1461** untergreifend zurückschwenken. Bei der Demontage des aus Schachtschüssen **131, 131'**... gebildeten Schachtes **13** (**Fig. 1**) genügt ein ruckartiges, eine Spreizung der Klauen **1472, 1472'** bewirkendes Anheben des unteren Schachtschusses, z.B. **131'**, so daß das Paßstück **1461** sich aus der dem oberen Schachtschuß,z.B. **131**, zugeordneten Falle zu lösen vermag. Die an dem Kupplungsglied **146** noch vorgesehene, nach der Seite hin vorspringende und von der Seite her zugängliche Aufnahme **1462** ermöglicht das Ansetzen eines Zuggliedes (**132** in den **Fig. 5** und **6**) mit Hilfe dessen sowohl die Montage als auch die Demontage des Fallschachtes **13** vom Dach **11** aus vorgenommen werden kann.

Für die einwandfreie Überführung abgeräumter Pfannen **116** aus der Rutsche **14** in den Fallschacht **13** ist die Rutsche **14** auslaufseitig mit einem Endschuß **241** versehen, der als Auflaufbremse ausgebildet ist und in **Fig. 9** dargestellt ist. Der Endschuß **241** ist längsgeteilt. Die Teilstücke **242, 242'** dieses Schusses sind einlaufseitig schwenkbar (vgl. die Doppelpfeile A) in Gelenken (**244, 244'**) und auslaufseitig unter der Einwirkung eines an ihnen angreifenden Federelementes **246** unter Reduzierung des Durchgangsquerschnitts gegeneinander verschwenkt (vgl. die Pfeile B). Der Materialdurchlauf ist nur unter Aufweitung (vgl. die Pfeile B') des auslaufseitigen Ende des Schusses **241** gegen die Kraft des Federelementes **246** auf die Regelbreite solcher Schüsse möglich. Dadruch wird Bewegungsenergie bzw. dem in diesen Endschuß **241** einlaufenden Material **116** innewohnende Wucht reduziert, und das Material rutscht abgebremst in den Fallschacht **13** od. dgl.

**Ansprüche**

1. Vorrichtung zum Fördern einer abzuräumenden Dacheindeckung od. dgl. von der geneigt verlaufenden Dachhaut bis zum Flur, wobei die Förderung im Dachbereich im wesentlichen in der Fallinie des Daches erfolgt, **dadurch gekennzeichnet,** daß die Vorrichtung aus trogförmigen, gleichartigen Grundelementen (140) zusammengesetzt ist, . die sich jeweils zum fallseitigen Ende hin geringfügig verjüngen und an ihren beiden Längsrändern (142, 142') Anschlußteile (143, 143') für Verbindungsmittel (144, 144') aufweisen, daß die Grundelemente (140) auf dem Dach (111) in den Endbereichen mit Überdeckung ineinandergehänt verlegt eine nach oben offene Rutsche (14) bilden und daß von der Traufe (112) bis zum Flur ein Fallschacht (13) vorgesehen ist, dessen in den Endbereichen ineinandergesteckte Schachtschüsse (131, 131') aus jeweils zwei Grundelementen (140) bestehen, wobei die über die Anschlußteile (143, 143') und die Verbindungsmittel (144, 144')verbundenen Grundelemente (140) so zueinander angeordnet sind, daß die Entfernung zwischen den Böden (145) der Schachtschüsse (131, 131') senkrecht zur Verbindungsebene der beiden Grundelemente (140) der doppelten Höhe eines Rutschenschusses (141, 141') entsprechen

2. Vorrichtung nach Anspruch 1, dadurch gekennzeichnet, daß die Anschlußteile (143, 143') als Randhülsen (143, 143') und die Verbindungsmittel (144, 144') als in die Randhülsen einschiebbare Verbindungsstäbe ausgebildet sind, wobei die Randhülsen an den Längsrändern (142 und 142') gegeneinander auf Lücke versetzt angeordnet sind und im Abstand vom sich verjüngenden Ende des Grundelementes (140) enden.

3. Vorrichtung nach Anspruch 2, dadurch gekennzeichnet, daß an den einander gegenüberliegenden Enden der Verbindungsstäbe (144, 144') eine zweiteilige Kupplung (146/147) vorgesehen ist, von der das obere Kupplungsglied (146) zum Verbinden von aufeinander folgenden Schachtschüssen (131, 131') lösbar in das untere Kupplungsglied (147) einfügbar ist.

4. Vorrichtung nach Anspruch 3, dadurch gekennzeichnet, daß mindestens das obere Kupplungsglied (146) auf die Verbindungsstäbe (144, 144') aufschraubbar ist.

5. Vorrichtung nach einem der Ansprüche 3 oder 4, dadurch gekennzeichnet, daß das untere Kupplungsglied (147) eine das als Paßstück ausgebildete obere Kupplungsglied (146) lösbar aufnehmende Falle ist.

6. Vorrichtung nach Anspruch 5, dadurch gekennzeichnet, daß die Falle aus zwei um eine gemeinsame Schwenkachse (1471) auseinander verschwenkbaren, in Schließstellung das Paßstück (1461) hinterfangenden Klauen (1472, 1472') gebildet wird, wobei den freien Enden der Klauen (1472, 1472') das Spreizen der Klauen (1472, 1472') beim Auflaufen des Paßstückes (1461) des korrespondierenden Kupplungsgliedes (146) bewirkende Leitbleche (1473, 1473') zugeordnet sind.

7. Vorrichtung nach einem der Ansprüche 3 bis 6, dadurch gekennzeichnet, daß dem in das Kupplungsglied (147) einfügbaren Kupplungsglied (146) eine nach der Seite vorspringende, von der Seite her zugängliche Aufnahme (1462) für ein abgehängtes, lösbar in sie einfügbares Zugglied (132) zugeordnet ist.

8. Vorrichtung nach einem der Ansprüche 1 bis 7, dadurch gekennzeichnet, daß das Grundelement (140) im sich dem geringfügig verjüngenden Endbereich gegenüberliegenden Endbereich bodenseitig mit einer Aussparung (148) od. dgl. und im gegenüberliegenden Endbereich mit einem in die Aussparung (148) oder dergleichen einhängbaren hakenförmigen Element versehen ist.

9. Vorrichtung nach Anspruch 8, dadurch gekennzeichnet, daß das hakenförmige Element von einem aus dem Boden (145) des Grundelementes (140) ausgestanzten, begrenzt nach außen weggebogenen Flächenteil gebildet wird.

10. Vorrichtung nach einem der Ansprüche 8 oder 9, dadurch gekennzeichnet, daß die Länge der Rutschenschüsse (141, 141'...) so bemessen und die Lage des aus dem Schuß (z.B. 141') unter Bildung der Aufnahme (148) für das hakenförmige Element (147) des vorausgehenden Schusses nach außen weggebogenen Flächenteils (148') so gewählt ist, daß jeder Schuß (141...) einer auf Dachlatten (114) abgelegten Rutsche (14) mit diesem nach außen weggebogenen Flächenteil (148') eine im Normabstand verlegte Dachlatte (114) übergreift.

11. Vorrichtung nach einem der Ansprüche 1 - 10, **dadurch gekennzeichnet,** daß der Endschuß (241) der Rutsche zur Bildung einer Auslaufbremse längsgeteilt ist, dessen sich im Bereich des Rutschenbodens überlappende Teilstücke (242,242') einlaufseitig in Gelenken (244, 244') gelagert und auslaufseitig unter der Einwirkung eines sie verbindenden Federelementes (246) unter Verringerung des Durchgangsquerschnittes gegeneinander verspannt sind.

12. Vorrichtung nach Anspruch 11, dadurch gekennzeichnet, daß die Auslaufbremse hinsichtlich ihrer Bremskraft einstellbar ist.

13. Vorrichtung nach Anspruch 11 oder 12, dadurch gekennzeichnet, daß dem Endschuß (241) ein pendelnd aufgehängter Fangkorb nachgeordnet ist.

**Claims**

1. Apparatus for handling roofing material or suchlike from the inclined roof to ground level, conveyance in the roof zone being performed chiefly along the slope line, characterised by the apparatus being made of trough-shaped similar basic elements (140), each tapering slightly towards the bottom end and featuring on the longitudinal rims (141, 142) connecting elements (143, 143') for connections (144, 144'), these basic elements (140), when laid on the roof (111) with their overlapping ends engaged, forming an open-top trough (14) and a fall shaft (13) provided from the gutter (112) down to the ground, this fall shaft consisting of the engaged sections (131, 131') linked at their ends and comprising two basic elements (140) each linked with the aid of the connecting elements 143, 143') and the connections (144, 144') and arranged relative to each other so that the distance between the bottoms (145) of the shaft sections (131, 131') perpendicular to the connection planes of the two basic elements (140) corresponds to twice the height of a chute section (141, 141').

2. Apparatus to claim 1, characterised by the connecting elements (143, 143') being designed as edge sleeves (143, 143') and the connections (144, 144') as bars insertable into the edge sleeves, the edge sleeves at the longitudinal rims (142, 142') being offset in staggered arrangement and terminating at a specific distance from the tapered end of the basic element 140).

3. Apparatus to claim 2, characterised by a two-part coupling (146/147) being provided at the opposed ends of the connecting bars (144, 144'), the top coupling part (146) being disconnectably engageable into the bottom coupling part (147) for linking two consecutive shaft sections (131, 131').

4. Apparatus to claim 3, characterised by at least the top coupling part (146) being screwable onto the connecting bars (144, 144').

5. Apparatus to one of claims 3 or 4, characterised by the bottom coupling part (147) being a catch disconnectably accommodating the top coupling part (146) designed as a matching piece.

6. Apparatus to claim 5, characterised by the catch being formed by two claws (1472, 1472') capable of slewing open around a common axis (1471) and, in locked position, closed behind the matching piece (1461), guide plates (1473, 1473') being provided for the free ends of the claws (1472, 1472'), these guide plates causing the claws to open when the matching piece (1461) of the corresponding coupling part (146) runs onto the guide plates.

7. Apparatus to one of claims 3 to 6, characterised by a sideways protruding receiving device (1462) accessible from one side for inserting a disengageable tension link (132) being allocated to the coupling part ( 146) engageable in the other coupling part (147).

8. Apparatus to one of claims 1 to 7, characterised by the basic element (140) having in its bottom a recess (148) or a similar arrangement in the end zone opposite the slightly tapering end zone, and a hook-shaped element engageable in the recess (148) or similar arrangement provided in the opposite end zone.

9. Apparatus to claim 8, characterised by the hook shaped element being an plate section partly punched out of the bottom (145) of the basic element (140) and slightly bent outwards.

10. Apparatus to one of claims 8 or 9, characterised by the length of the chute sections (141, 141',...) and the location of the plate section (148') punched and bent outwards to form the recess (148) for the hook shaped element (147) of the preceding chute section, being selected so that each section (141 ...) of a chute (14) supported on roof battens (114) engages a standard-spaced roof batten (114) with this outward bent plate section (148').

11. Apparatus to one of claims 1 to 10, characterised by the end section (241) of the chute being longitudinally split to form an outlet brake and the plate sections (242, 242') overlapping in the chute bottom zone and fastened by hinges (244, 244') at their entry end and connected and braced against each other by a spring element (246) at their outlet end to reduce the cross section of the passage by action of the spring connecting element.

12. Apparatus to claim 11, characterised by the force of the outlet brake being adjustable.

13. Apparatus to one of claims 11 or 12, characterised by a pendulous collecting basket being attached to the chute end section (241).

**Revendications**

1. Dispositif pour transporter une couverture de toit ou du matériel semblable qui est à enlever du toit incliné jusqu'au sol, le transport se faisant essentiellement en suivant la pente du toit, caractérisé en ce que le dispositif est composé d'éléments de base (140) similaires en forme d'auge qui se rétrécissent vers leur extrémité inférieure et présentent sur leur deux bords longitudinaux (142, 142') des pièces de connection (143, 143') pour des moyens de raccordement (144, 144'), que les extrémités des éléments de base (140) placés sur le toit (111) se recouvrent et ces éléments sont accrochés l'un à l'autre pour former une goulotte (14) ouverte dans sa section supérieure et qu'un puits ou de chute (13) est prévu de l'égout jusqu'au sol, le puits de chute étant composé de deux sections (131, 131') chacune comprenant deux éléments de base (140) emboîtés l'un dans l'autre, que les éléments de base joints par les pièces de connection (143, 143') et les moyens de raccordement (144, 144') sont arrangés de sorte que la distance entre le fonds (145) des sections de puits de chute (131, 131') au droit du plan de connection des deux éléments de base (140) correspond au double de la hauteur d'une section de goulotte (141, 141').

2. Dispositif suivant la revendication 1, caractérisée en ce que les pièces de connection (143, 143') sont construites en forme de douille de bord (143, 143') et les moyens de raccordement (144, 144') en forme de barres de connection emboîtables dans les douilles de bord; ces dernières sont agencées en chicane sur les bords longitudinaux et se terminent à une certaine distance du bout de l'élément de base (140).

3. Dispositif suivant la revendication 2, caractérisé en ce que les bouts des barres de connection (144, 144') faisant face l'un à l'autre sont munis des éléments d'un accouplement à deux pièces (146/147) dont la pièce supérieure (146) peut être engagée détachablement dans la pièce d'accouplement inférieure (147) pour joindre des sections de puits de chute (131, 131') successives.

4. Dispositif suivant la revendication 3, caractérisé en ce qu'au moins la pièce d'accouplement supérieure (146) peut être vissée sur les barres de connection (144, 144').

5. Dispositif suivant l'une ou l'autre des revendications 3 et 4, caractérisé en ce que la pièce d'accouplement inférieure (147) est un loquet pour engager et dégager la pièce d'accouplement supérieure (146) construite en forme d'une pièce ajustée.

6. Dispositif suivant la revendication 5, caractérisé en ce que le loquet consiste en deux griffes (1472, 1472') qui peuvent être pivotées en position ouverte autour d'un axe commun (1471) et fermées derrière la pièce ajustée (1461), des tôles-guides (1473. 1473') étant prévues pour les extrémités libres des griffes (1472, 1472') pour ouvrir les griffes quand la pièce ajustée (1461) de la pièce d'accouplement (146) correspondante glisse sur les tôles-guides.

7. Dispositif suivant l'une des revendications 3 à 6, caractérisé en ce qu'un logement (1462) saillant latéralement et accessible d'un côté pour engager et dégager un tirant (132) est prévu pour la pièce d'accouplement (146) qui peut être engagée dans la pièce d'accouplement (147).

8. Dispositif suivant l'une des revendications 1 à 7, caractérisé en ce que l'élément de base (140) est pourvu dans son fond d'un évidement (148) ou d'un dispositif semblable dans la partie en face de la zone de son extrémité légèrement conique et, dans la zone de l'extrémité en face, d'un élément en forme de crochet qui peut être engagé dans le logement (148).

9. Dispositif suivant la revendication 8, caractérisé en ce que l'élément en forme de crochet consiste en une section de tôle partiellement découpée du fond (145) de l'élément de base (140) et légèrement courbée vers l'extérieur.

10. Dispositif suivant l'une ou l'autre des revendications 8 et 9, caractérise en ce que la longueur des sections de goulotte (141, 141') est la position de la section de tôle (148') courbèe vers l'extérieur pour former le logement (148) de l'élément en forme de chrochet (147) sont telles que chaque section (141 ...) d'une goulotte placée sur des lattes de toit (114) engage une latte de toit (114) montée à espacement normal par sa partie (148') courbée vers l'extérieur.

11. Dispositif suivant l'une des revendications 1 - 10, caractérisée en ce que la section d'extrémité (241) de la goulotte est fendue longitudinalement pour former un frein de décharge dont les sections (242, 242') se recouvrent dans la zone du fond de la goulotte et sont logées dans des articulations (244, 244') dans la zone d'entrée et jointes et mises sous pression par un élément ressort (246) dans la zone de sortie pour reduire le profil de passage.

12. Dispositif suivant la revendication 11, caractérisé en ce que la force du frein de décharge est variable.

13. Dispositif suivant l'une ou l'autre des revendications 11 et 12, caractérisé en ce qu'une corbeille d'arrêt est attachée en pendule à la section d'extrémité (241).

Fig.1

EP 0 157 292 B1

Fig. 2

Fig. 3

Fig. 4

Fig. 5

Fig. 6

Fig. 7

Fig. 8

Fig. 9